# FASCICULE DE BREVET EUROPEEN

(11) **EP 2 853 506 B1**
(45) Date de publication et mention de la délivrance du brevet: **07.12.2016**
(21) Numéro de dépôt: 13186125.4
(22) Date de dépôt: 26.09.2013
(51) Int. Cl.: B65D 83/38, B29C 45/14, B29C 45/16, B29C 45/00

(54) **Procédé pour fabriquer un ensemble coupelle/valve, ensemble coupelle/valve et presse pour la mise en oeuvre du procédé**
Verfahren zur Herstellung einer Einheit aus Ventilteller und Ventil, Ventilteller- und Ventil-Einheit und Presse zur Umsetzung des Verfahrens
Method for manufacturing a valve/mounting cup assembly, valve/ mounting cup assembly and press for implementing said method

(43) Date de publication de la demande: 01.04.2015
(73) Titulaire: Lindal France SAS, 54150 Briey (FR)
(72) Inventeur: Bodet, Hervé, 55100 VERDUN (FR); Fournet, M. Dominique, 55430 Belleville sur Meuse (FR)
(74) Mandataire: Vièl, Frédérique

(56) Documents cités:
- EP-A1- 2 551 215
- EP-A2- 0 825 128
- FR-A1- 2 992 252
- GB-A- 2 360 272
- GB-A- 2 417 024
- JP-A- H06 312 773
- US-A- 5 643 521

## Description

L'invention concerne un procédé pour fabriquer un ensemble coupelle/valve comprenant une coupelle munie d'un dôme et d'un corps de sertissage, un corps de valve, une tige, un élément ressort pour maintenir la tige en position fermée en l'absence de contrainte externe, un joint intérieur à placer dans le dôme de la coupelle et un joint extérieur à placer dans le bord de sertissage de la coupelle. L'invention concerne également un ensemble coupelle/valve et une presse de moulage pour la mise en oeuvre du procédé.

Les récipients aérosol sont couramment utilisés dans de nombreux domaines. Ils sont habituellement constitués d'un boîtier fermé par une coupelle sur laquelle est fixée une valve. Concrètement, l'ensemble coupelle/valve est fabriqué sur un premier site, le boîtier sur un second site et l'ensemble est assemblé lors du remplissage.

Un ensemble coupelle/valve est obtenu en assemblant six pièces différentes : la coupelle, un joint extérieur, un joint intérieur, une tige appelée aussi stem, un ressort métallique et un corps de valve. La coupelle est métallique. Elle est obtenue par emboutissage d'un flanc métallique. Les deux joints sont obtenus par moulage d'un matériau thermoplastique. La tige et le corps de valve sont obtenus par moulage d'une matière plastique rigide. Les différentes pièces sont préfabriquées dans des presses distinctes et sont ensuite assemblées sur une machine d'assemblage.

L'objectif de l'invention est de proposer un procédé de fabrication d'un ensemble coupelle/valve qui soit plus simple que celui actuellement utilisé. Un autre objectif de l'invention est de diminuer le nombre de pièces métalliques contenues dans un tel ensemble coupelle/valve.

Cet objectif est atteint par le procédé, la presse et l'ensemble coupelle/valve de l'invention.

Le procédé se caractérise par le fait que le joint intérieur et le joint extérieur sont moulés simultanément sur une même face de la coupelle dans une presse à l'aide d'une même buse d'injection, des passages étant prévus dans le moule et/ou la coupelle pour permettre au matériau en fusion d'atteindre l'emplacement des deux joints en formant des éléments de liaison reliant ensemble les deux joints, ces éléments de liaison étant constitués de préférence par une plusieurs bandes ou par une paroi continue.

Cela évite de stocker séparément les joints avant l'assemblage de l'ensemble coupelle/valve. On pourra prévoir une ou plusieurs gorges dans la face inférieure de la coupelle qui relient la zone de moulage du premier joint et la zone de moulage du deuxième joint.

La buse d'injection est de préférence située au niveau de l'un des deux joints.

Pour des raisons de simplification de la presse de moulage, on peut prévoir d'étendre le moulage du joint extérieur sur une partie de la coupelle en direction du dôme. Le joint intérieur peut être par exemple moulé sur le disque radial formant le fond du dôme de la coupelle.

Le moulage des joints est réalisé dans une presse de moulage munie d'un plateau rotatif ayant au moins deux positions de travail. Dans la première position, la coupelle est placée sur le plateau rotatif ou bien elle y est moulée, dans la deuxième, les joints sont moulés, dans une troisième position ou dans la première position, la coupelle munie de ses joints est extraite du plateau rotatif et l'assemblage des autres constituants de l'ensemble coupelle/valve est réalisé dans une autre machine.

Dans une variante de réalisation, le plateau rotatif de la presse de moulage a au moins trois positions de travail appelées stations et les étapes successives suivantes sont prévues :
a) la coupelle est moulée ou placée sur le plateau rotatif dans la première station, puis le plateau est pivoté jusqu'à la station suivante de sorte que la coupelle se trouve dans la deuxième station ;
b) le premier et le deuxième joint sont moulés dans la coupelle, puis le plateau est pivoté jusqu'à la station suivante de sorte que la coupelle munie des joints se trouve dans la troisième station ;
c) la valve est mise en place dans la coupelle en formant l'ensemble coupelle/valve. Pour cela, on peut insérer soit une unité de valve déjà prémontée, soit ses différents constituants, c'est à dire en général le corps de valve, la tige et l'élément ressort.

Dans une autre variante du procédé, le plateau rotatif de la presse de moulage a au moins quatre positions de travail, appelées stations, et les étapes successives suivantes sont prévues dans le procédé :
a) la coupelle est moulée ou placée sur le plateau rotatif dans la première station, puis le plateau est pivoté jusqu'à la station suivante de sorte que la coupelle se trouve dans la deuxième station ;
b) le premier et le deuxième joint sont moulés dans la coupelle, puis le plateau est pivoté jusqu'à la station suivante de sorte que la coupelle munie des joints se trouve dans la troisième station ;
c) le corps de valve et/ou la tige sont moulés sur le plateau rotatif, puis le plateau est pivoté jusqu'à la station suivante de sorte que la coupelle munie des joints, et le corps de valve et/ou la tige se trouvent dans la dernière station ;
d) le corps de valve, la tige et l'élément ressort sont insérés dans la coupelle en formant l'ensemble coupelle/valve.

Dans une autre variante de réalisation du procédé, le plateau rotatif de la presse de moulage a au moins quatre positions de travail, appelées station, et les étapes successives suivantes sont prévues dans le procédé :
a) la coupelle est moulée ou placée sur le plateau rotatif dans la première station de travail, puis le plateau est pivoté jusqu'à la station suivante de sorte que la coupelle se trouve dans la deuxième station ;
b) le premier et le deuxième joint sont moulés dans la coupelle, puis le plateau est pivoté jusqu'à la station suivante de sorte que la coupelle munie des joints se trouve dans la troisième station ;
c) la tige préfabriquée est insérée dans la coupelle munie des joints, puis le plateau est pivoté jusqu'à la station suivante de sorte que la coupelle munie des joints et de la tige se trouve dans la quatrième station ;
d) le corps de valve préfabriqué est inséré dans la coupelle munie des joints, de la tige et de l'élément ressort en formant l'ensemble coupelle/valve,
l'élément ressort pouvant être introduit soit à l'étape c), soit à l'étape d).

La coupelle est introduite à l'étape a) dans le plateau tournant soit par moulage dans la première station, soit par mise en place d'une coupelle préfabriquée. La coupelle peut être préfabriquée immédiatement avant son introduction sur le plateau tournant en la moulant dans une presse secondaire associée à la presse principale, dite presse de coupelle puis en la plaçant sur le plateau rotatif de la presse principale à l'aide d'une partie de la presse de coupelle.

De même, la tige et/ou le corps de valve peuvent être moulés dans des presses secondaires associées à la presse de moulage principale, dites presse de tige ou presse de corps de valve, et être insérés dans la coupelle par une partie de la presse secondaire dans laquelle ils ont été moulés. Ainsi, la tige ou le corps de valve peuvent eux aussi être fabriqués au cours de l'assemblage.

L'élément ressort est inséré en même temps ou après l'insertion de la tige et avant l'insertion du corps de valve.

L'invention concerne également un ensemble coupelle/valve comprenant une coupelle, un corps de valve, une tige, un élément ressort pour maintenir la tige en position fermée en l'absence de contrainte externe, un joint intérieur à placer dans le fond du dôme de la coupelle et un joint extérieur à placer dans le bord de sertissage de la coupelle. Les joints sont placés sur la même face de la coupelle. Conformément à l'invention, le joint intérieur et le joint extérieur sont moulés dans la coupelle, le joint intérieur et le joint extérieur sont reliés ensemble par des éléments de liaison, ces éléments de liaison étant constitués de préférence par une ou plusieurs bandes ou par une paroi continue.

Si la zone de moulage du joint externe est étendue, le joint extérieur se prolonge par un élément moulé sur la partie de la coupelle prolongeant le bord de sertissage en direction du dôme.

La coupelle peut être munie d'une ou plusieurs gorges réalisées dans sa face inférieure, lesquelles gorges relient entre eux le joint intérieur et le joint extérieur ou l'élément moulé dans le prolongement du joint extérieur

Selon les matériaux utilisés pour la coupelle et pour les joints, ceux-ci adhérent plus ou moins bien à la coupelle. En général, l'adhérence est suffisante pour que les joints restent en place sans qu'il soit nécessaire de prévoir des moyens de retenue mécanique. On peut cependant prévoir de tels moyens de retenue. Par exemple, il est possible de prévoir dans l'ouverture centrale de la coupelle un bord roulé formant une gorge ouverte vers l'extérieur. Cette gorge constitue pour le joint un épaulement de retenue.

Pour un meilleur recyclage, la coupelle peut être réalisée dans une matière plastique, de préférence par moulage.

Des enfoncements radiaux en forme de griffe peuvent être prévus dans la coupelle pour l'encliquetage du corps de valve dans le dôme de la coupelle.

L'invention concerne également une presse de moulage pour la mise en oeuvre du procédé. Cette presse est munie d'une buse d'injection pour mouler simultanément le joint extérieur et le joint intérieur sur la même face de la coupelle, des passages étant prévus dans le moule pour mouler les joints et/ou dans la coupelle pour permettre au matériau en fusion d'atteindre l'emplacement des deux joints en formant des éléments de liaison reliant ensemble les deux joints, ces éléments de liaison étant constitués de préférence par une plusieurs bandes ou par une paroi continue.

Elle peut être munie d'un plateau rotatif pouvant pivoter entre au moins deux positions. Elle peut être munie de moyens pour insérer dans la coupelle la tige, l'élément ressort et le corps de valve.

Dans une variante de réalisation, la presse est munie d'une ou plusieurs presses secondaires pour mouler la coupelle, la tige ou le corps de valve, dite presse de coupelle, presse de tige ou presse de corps de valve. Chaque presse secondaire est constituée d'un plateau fixe parallèle au plateau rotatif de la presse principale et d'un plateau rotatif pouvant tourner entre au moins deux positions, la première dans laquelle il est en face du plateau fixe de la presse secondaire et la deuxième dans laquelle il est en face du plateau rotatif de la presse principale en regard de la station correspondante, une première partie du moule de l'élément à mouler étant placée sur le plateau fixe de la presse secondaire et l'autre partie du moule étant placée sur le plateau rotatif de la presse secondaire. On peut également prévoir que la presse soit équipée d'une unité de moulage de la coupelle dans sa première position.

L'invention est décrite plus en détail à l'aide des figures qui montrent :
- Figure 1: vue en coupe d'un ensemble coupelle/valve conforme à l'invention ;
- Figure 2: une vue éclatée de l'ensemble coupelle/valve de la figure 1 ;

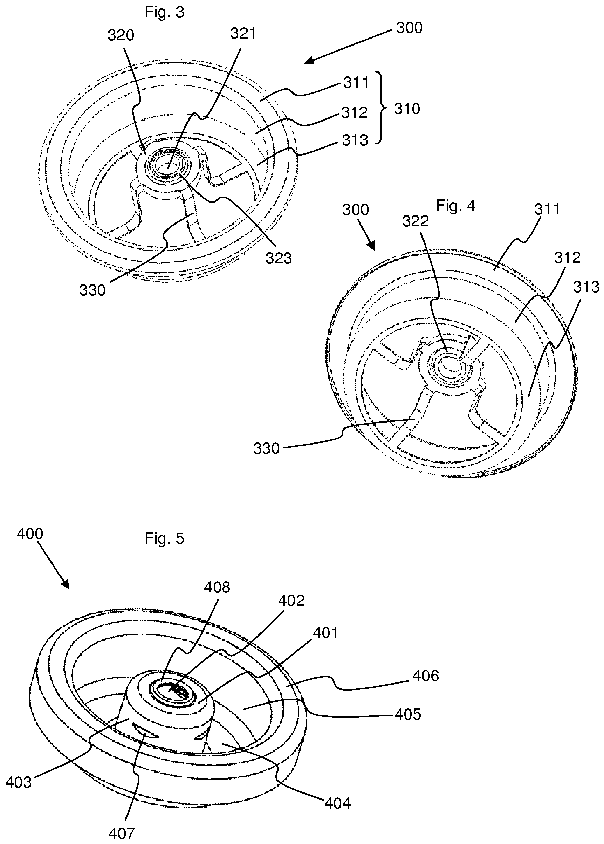

- Figure 3: une vue isométrique du dessus de l'unité de joints ;
- Figure 4: une vue isométrique du dessous de l'unité de joints ;
- Figure 5: une vue isométrique du dessus de la coupelle ;

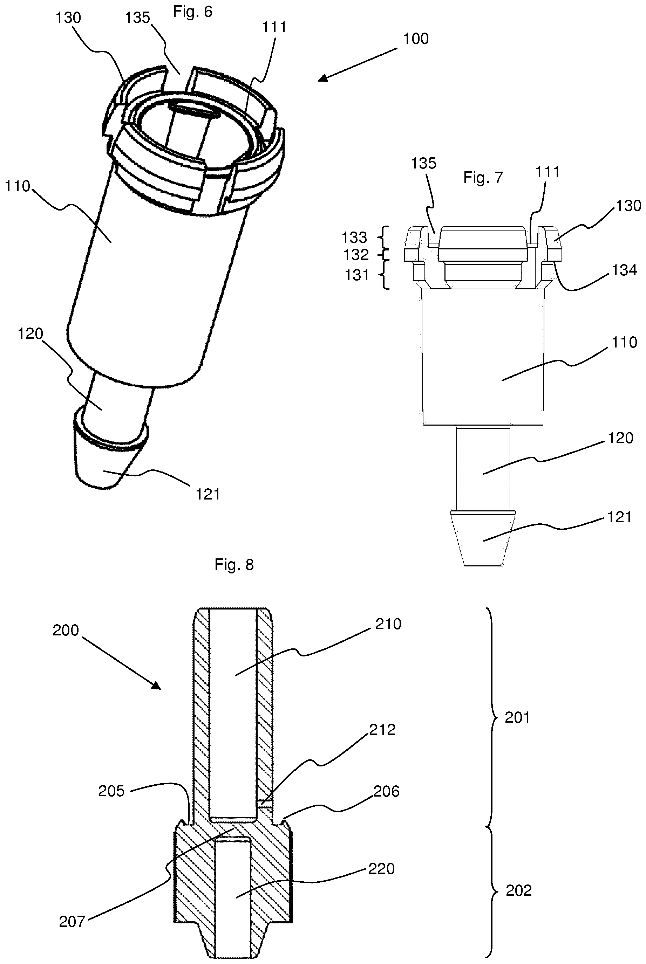

- Figure 6: une vue isométrique du dessus du corps de valve ;
- Figure 7: une vue de côté du corps de valve ;
- Figure 8: une vue en coupe de la tige.

La valve de l'invention (1) se compose de cinq parties principales : le corps de valve (100), la tige (200), l'unité de joints (300), le ressort (500) et la coupelle (400). Les trois premiers constituants peuvent être obtenus par injection d'une matière synthétique appropriée. La coupelle (400) peut être en métal (aluminium, fer blanc, etc.) ou en matière plastique. Dans ce dernier cas, elle peut être également obtenue par injection.

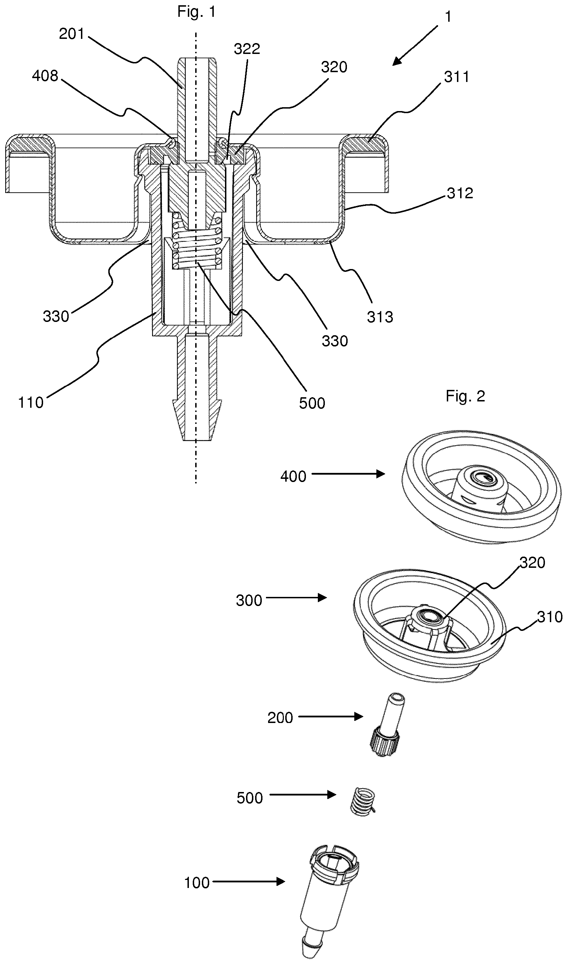

La description ci-dessous se rapporte à l'exemple de réalisation présenté sur les figures. Les références spatiales telles que « supérieur », « inférieur », « haut », « bas », « au-dessus » ou « en dessous » se rapportent à la position de la valve telle qu'elle est représentée sur la figure 1. Elles n'ont pas de valeur absolue. Il va de soi, que la valve peut être utilisée dans toutes les positions, notamment tête en bas auquel cas, ce qui était au-dessus de trouve en dessous et inversement. De plus, les cinq pièces principales présentent à quelques détails près une symétrie de révolution générale autour de l'axe vertical passant par le centre de la tige et du corps de valve. Cet axe est indiqué par un trait discontinu sur la figure 1. Les références spatiales « axial » ou « radial » se rapportent à cet axe de symétrie central. Par « axial », on entend sur l'axe de symétrie générale ou parallèle à cet axe, tandis que par « radial », on entend perpendiculaire à cet axe ou s'approchant de la perpendiculaire.

La coupelle (400) présente une forme classique. Au centre, elle est constituée d'un disque radial (401) traversé par une ouverture centrale (402). Le disque se poursuit sur son bord extérieur par un premier cylindre ou tronc de cône (403) dirigé vers le bas. Ces deux parties forment ensemble un dôme. Le bas du premier cylindre, ou tronc de cône, se prolonge par un élément annulaire radial (404) s'étendant vers l'extérieur et qui se termine par un deuxième cylindre ou tronc de cône (405) dirigé vers le haut. Le bord supérieur du deuxième cylindre ou tronc de cône (405) s'écarte vers l'extérieur en formant un bord de sertissage (406) roulé. Quatre enfoncements radiaux (407) dirigés vers l'intérieur et formant des griffes sont répartis sur le premier cylindre ou tronc de cône (403). La coupelle peut être métallique (fer blanc, aluminium, etc.) ou en matière plastique. Au niveau de l'ouverture centrale (402), le bord du disque radial est roulé de sorte à former un canal (408) servant de moyens de retenue pour le joint intérieur.

Le corps de valve (100) est constitué essentiellement d'une partie supérieure (110) creuse et d'une tubulure inférieure (120) également creuse. Le corps de valve est ainsi traversé de part en part par un canal.

Le sommet de la partie supérieure (110) se termine par un bord en saillie (111) formant un anneau radial continu. En dessous du sommet, la face extérieure de la partie supérieure se poursuit par une couronne (130) s'étendant vers le haut au-delà du bord en saillie (111). Cette couronne (130) dépasse donc radialement de l'enveloppe cylindrique de la partie supérieure (110) et axialement au-dessus du bord en saillie (111). La face extérieure de cette couronne (130) est divisée en trois sections principales (131, 132, 133) successives placées les unes au-dessus des autres. La première section (131) a un diamètre supérieur à celui de l'élément supérieur (110), mais inférieur à la deuxième section (132). Le passage entre ces deux sections (131, 132) se fait par un épaulement (134) sensiblement radial. Cet épaulement est situé en dessous du bord en saillie (111). La deuxième section est poursuivie vers le haut par la troisième section (133) dont le diamètre diminue progressivement de sorte à former un plan incliné. Le bord en saillie (111) est donc entouré par la partie supérieure de la couronne (130) qui la surplombe.

Quatre créneaux (135) sont réalisés dans toute l'épaisseur de la couronne (130). Ils forment quatre fentes traversant toute l'épaisseur de la couronne depuis son extrémité supérieure jusqu'à la base du bord en saillie (111) et elles se poursuivent jusqu'en bas de la couronne (130) en affleurant l'enveloppe extérieure de la partie supérieure (110).

La tubulure inférieure (120) peut être munie de moyens de retenue (121) pour la fixation d'un tube plongeur par exemple. Ces moyens de retenue sont constitués ici par un élargissement en forme de tronc de cône inversé dont la base forme un épaulement radial.

La tige (200) est constituée essentiellement d'un élément cylindrique. La face extérieure de cet élément cylindrique est divisée en deux sections principales (201, 202). La première (201) s'étend du sommet de la tige jusqu'à un premier épaulement (205). À partir de ce premier épaulement, la face extérieure de l'élément cylindrique s'élargit en formant la deuxième section cylindrique (202). Le premier épaulement (205) présente une saillie annulaire (206) dirigée vers le haut. L'extrémité supérieure de la tige est de préférence arrondie pour faciliter la mise en place d'un diffuseur.

Un canal supérieur (210) est réalisé dans la partie supérieure de l'élément cylindrique. Ce canal est ouvert à son sommet et se termine en bas au niveau d'une paroi de séparation radiale (207). Un orifice de passage radial (212) débouchant sur l'extérieur est réalisé dans la paroi du canal supérieur (210), à proximité de la paroi de séparation (207) et au-dessus du premier épaulement (205). Cet orifice (212) met donc en contact l'intérieur du canal supérieur (210) et la première section (201) de la face extérieure de l'élément cylindrique.

Un canal inférieur (220), de préférence coaxial au canal supérieur (210), est réalisé en dessous de la paroi de séparation (207). Ce canal inférieur est ouvert à son extrémité inférieure et se termine en haut par la paroi de séparation (207). L'extrémité inférieure de la deuxième section (202) se termine par un tenon (208) servant de guidage pour le ressort (500).

Le corps de valve (100) et la tige (200) sont réalisés dans une matière plastique telle que du polypropylène (PP), du polyéthylène haute densité (PEHD) ou du polyoxyméthylène (POM).

L'unité de joints (300) comprend au moins un premier élément annulaire (310) et un deuxième élément annulaire (320). Le premier élément annulaire (310) remplit la fonction de joint extérieur. Il assure l'étanchéité à l'interface entre le bord de sertissage (406) de la coupelle et le boîtier de l'aérosol (non représenté). Le deuxième élément annulaire (320) remplit la fonction de joint intérieur. Il assure d'une part l'étanchéité entre le sommet du corps de valve (100) et le disque (401) de la coupelle, et d'autre part l'obstruction de l'orifice de sortie (212) de la tige. Le premier élément annulaire (310) présente un bord annulaire (311), qui constitue à proprement parler le joint extérieur, ayant une forme complémentaire à la face inférieure du bord de sertissage (406) de la coupelle. Il se poursuit par un cylindre ou tronc de cône (312) dont la face intérieure est complémentaire à la face extérieure du deuxième cylindre ou tronc de cône (405) de la coupelle. Cet élément cylindrique ou tronconique (312) se poursuit par un élément annulaire (313) dont la face supérieure est complémentaire à la jonction entre le deuxième cylindre ou tronc de cône (405) et la partie annulaire (404) de la coupelle.

Le deuxième élément annulaire (320), ou joint intérieur, est traversé en son centre par une ouverture centrale (321). Cette ouverture centrale est dimensionnée pour enserrer la première section (201) de la tige au niveau de l'orifice (212). La face supérieure du joint intérieur est sensiblement plane et radiale. Dans l'exemple présenté ici, elle présente autour de l'ouverture centrale (321) un bourrelet (323) correspondant au volume du bord roulé (408) servant de gorge de retenue. Une gorge annulaire radiale (322) est réalisée sur sa face inférieure. Cette gorge permet d'obtenir une étanchéité parfaite entre le joint intérieur et la tige. Elle confère au joint intérieur une certaine flexibilité qui lui permet, lorsque la tige est déplacée vers le bas de suivre le mouvement de celle-ci en s'écartant de la face extérieure de la tige, libérant ainsi l'orifice (212). Le joint intérieur (320) est dimensionné de telle sorte, qu'à l'état monté, le bord en saillie (111) du corps de valve vient s'appuyer sur la face inférieure du joint intérieur à l'extérieur de la gorge annulaire (322) tandis que la partie du premier épaulement (205) de la tige situé à l'intérieur de la saillie annulaire (206) s'appuie sur la partie du joint située à l'intérieur de la gorge, éventuellement en dépassant sur cette gorge. Dans l'exemple de la figure 1, la paroi intérieure de la gorge annulaire (322) et la saillie annulaire (206) de la tige sont de dimension complémentaire avec des pans inclinés facilitant la mise en place de l'épaulement (205) sur le joint intérieur (320).

Les deux éléments annulaires (310, 320) sont réunis par quatre bandes (330).

L'unité de joints (300) est fabriquée dans un matériau thermoplastique tel que du caoutchouc naturel ou synthétique.

L'invention porte notamment sur le procédé de fabrication de l'ensemble valve/-coupelle. Dans le cadre de l'invention, il est prévu de fabriquer autant que possible les pièces simultanément à l'assemblage pour éviter le stockage intermédiaire de pièces préfabriquées. Pour cela, on peut utiliser une presse munie d'un plateau rotatif pouvant tourner entre différentes positions ou stations. Une telle presse est connue par exemple du document JP 2010 179511 A. Le plateau rotatif présente autant de secteurs identiques que de positions possibles. Ainsi, les coupelles placées dans chaque secteur peuvent passer dans chaque position successive pour y subir l'une des étapes de procédé. Face à ce plateau rotatif se trouve en regard de chaque position soit un plateau portant un moule, soit une machine pour introduire la ou les pièces préfabriquées.

Dans la première station, correspondant à la première position du plateau rotatif, on place la coupelle (400) dans son support. Cela peut être réalisé en posant une coupelle préfabriquée. Il est également possible de mouler cette coupelle. Pour cela, un plateau de moulage de coupelle est placé en face du plateau rotatif au regard de la première station. Chaque secteur du plateau rotatif porte un moule avec l'empreinte de la face supérieure de la coupelle. Le plateau de moulage de coupelle porte un moule avec l'empreinte de la face inférieure de la coupelle et une buse d'injection. Des moyens sont prévus pour rapprocher les deux plateaux pour le moulage. Après le moulage, le plateau de moulage de coupelle est écarté et la coupelle reste sur le plateau rotatif.

Dans une variante de réalisation, la coupelle est réalisée sur une presse secondaire associée à la presse principale. La presse secondaire est munie d'un plateau fixe parallèle au plateau rotatif de la presse principale et d'un plateau rotatif pouvant être placé successivement en face du plateau fixe de la presse secondaire et en face du plateau rotatif de la presse principale. Le plateau rotatif de la presse secondaire est de préférence muni de deux moules symétriques par rapport à son axe de rotation. Ainsi lorsque le premier moule est en face du plateau fixe de la presse secondaire, le deuxième moule se trouve en regard de la première station. Un moule portant l'empreinte de la face supérieure de la coupelle est placé sur le plateau fixe et deux moules portant l'empreinte de la face inférieure de la coupelle sont placés sur le plateau rotatif. Des moyens sont prévus pour rapprocher et écarter le plateau rotatif de la presse secondaire du plateau fixe de la presse secondaire et du plateau rotatif de la presse principale. Dans une première étape, les plateaux sont rapprochés et la coupelle est injectée dans la presse secondaire. Les plateaux sont ensuite écartés et la coupelle est maintenue dans le plateau rotatif de la presse secondaire. Ce plateau est ensuite tourné de sorte que le premier moule avec la coupelle se trouve en regard de la première station du plateau rotatif de la presse principale. Les plateaux sont rapprochés. Une deuxième coupelle est injectée dans la presse secondaire et la première coupelle est placée dans son support sur le plateau rotatif de la presse principale. Les plateaux sont à nouveau écartés et les deux plateaux rotatifs sont tournés pour passer l'un dans sa position initiale et l'autre dans la deuxième station. Une telle presse est décrite par exemple dans la demande FR 11 51 733 publiée sous le numéro FR 2 972 133.

Dans cette deuxième station, une unité de joints est moulée sur la coupelle (400) provenant de la première station. Les deux éléments annulaires (310, 320) sont injectés ensemble, ce qui nécessite au moins un passage entre les deux joints. Cela peut être réalisé par exemple par une paroi continue recouvrant la totalité de la face inférieure de la coupelle (400). Cependant, pour des raisons d'économie, il est possible de ne relier les deux éléments annulaires (310, 320) que par une ou plusieurs bandes (330). Ces bandes (330), comme la paroi continue, épousent la forme de la face inférieure de la coupelle. Le passage nécessaire pour la paroi continue ou pour les bandes (330) met en contact les deux cavités prévues pour les éléments annulaires (310, 320). Il est donc possible de ne prévoir qu'une seule buse d'injection pour injecter les deux éléments annulaires. La matière en fusion peut s'écouler depuis l'une des cavités vers l'autre en passant par l'espace prévu pour cette paroi continue ou pour les bandes (330). La buse d'injection est de préférence située au niveau de l'un des deux joints (311, 320). Pour le moulage des joints, il faut prévoir en regard de la deuxième station un plateau portant un moule muni de l'empreinte inférieure des joints et des bandes (330) ou de la paroi continue. Des moyens sont prévus pour écarter et rapprocher le plateau de moulage du plateau rotatif. Parallèlement au moulage des joints, une deuxième coupelle est placée ou moulée dans le deuxième secteur du plateau rotatif. Après moulage des joints, le plateau de moulage est écarté et le plateau rotatif est tourné pour amener la première coupelle munie des joints dans la troisième station. Parallèlement, la deuxième coupelle est amenée à la deuxième station.

Il est possible de prévoir dans la face inférieure de la coupelle des gorges reliant le bord de sertissage (406) et le disque radial (401). Ces gorges servent de passage pour le moulage de l'unité de joints (300). La matière contenue dans ces gorges forme les bandes (330).

Cette deuxième station constitue le coeur de l'invention. Le sort de la coupelle munie des joints varie d'une variante de réalisation à l'autre. Le montage des autres pièces (tige, corps de valve, élément ressort) peut être réalisé dans une autre machine. Cependant, l'invention prévoit que ce montage puisse se faire dans la même machine.

Dans une première variante de réalisation, le corps de valve (100) et la tige (200) sont moulés séparément dans la troisième station. Pour cela, un moule portant l'empreinte d'une partie du corps de valve (100) et de la tige (200) est prévu dans chaque secteur du plateau rotatif de la presse principale, l'empreinte de l'autre partie étant prévue sur un moule monté sur un plateau situé en regard de la troisième station. Des moyens sont prévus pour écarter et rapprocher ce plateau du plateau rotatif de la presse principale. Il est possible de monter ce moule de corps de valve et de tige sur le même plateau que celui portant le moule des joints. Il est même possible de combiner dans la deuxième station le moulage des joints dans la coupelle et le moulage de la tige et du corps de valve. Après moulage du corps de valve et de la tige, les plateaux sont écartés et le plateau rotatif est tourné pour que la première coupelle arrive dans la quatrième station, la deuxième dans la troisième station et la troisième dans la deuxième station.

Le montage final de l'ensemble coupelle/valve est réalisé dans la quatrième station. La tige est introduite par son extrémité supérieure dans les ouvertures centrales (321, 402) du joint intérieur (320) et de la coupelle (400) respectivement jusqu'à ce que le premier épaulement (205) vienne en appui sur le joint intérieur (320). Le ressort est ensuite introduit et le corps de valve est placé sur la coupelle en introduisant la couronne (130) à l'intérieur du dôme (403, 401) de la coupelle jusqu'à ce que l'épaulement (134) s'engrène derrière les griffes (407) de la coupelle. Dans cette position, le bord annulaire en saillie (111) du corps de valve et l'épaulement (205) de la tige appuient fermement contre le joint intérieur (320) de sorte que l'étanchéité est assurée entre le canal central du corps de valve et la face extérieure de celui-ci. Le produit ou le gaz ne peut pas passer par les créneaux (135) pour pénétrer dans le canal central du corps de valve. Les quatre bandes (330) de l'unité de joints passent dans les créneaux (135) de la couronne (130). Il est également possible de monter d'abord la tige et le ressort dans le corps de valve puis d'introduire cette unité dans la coupelle.

Dans une autre variante de réalisation du procédé de l'invention, plutôt que de mouler la tige (200) et le corps de valve (100) sur le plateau rotatif, des pièces préfabriquées sont introduites dans la coupelle à la troisième station et à la quatrième station. Dans ce cas, il n'est plus nécessaire de prévoir une station d'assemblage.

Dans une première version de cette deuxième variante, la tige (200) est moulée dans une presse secondaire, dite presse de tige. Elle fonctionne de la même façon que la presse secondaire permettant le moulage de la coupelle. Le plateau rotatif de la presse de tige peut prendre deux positions : dans la première, il est en face du plateau fixe de la presse de tige et permet le moulage de la tige, dans la deuxième, il est tourné pour se trouver en face de la troisième station du plateau rotatif de la presse principale, de sorte à pouvoir insérer la tige moulée précédemment dans la coupelle munie des joints et placée dans la troisième station. Ce plateau rotatif est de préférence également muni de deux moules symétriques par rapport à son axe de rotation de sorte que lorsque le premier moule se trouve en face de la troisième station, le deuxième se trouve en face du plateau fixe permettant ainsi simultanément de mouler une tige et de placer la précédente dans la coupelle située dans la troisième station. De façon similaire, on peut prévoir une presse secondaire pour le corps de valve, dite presse de corps de valve.

On peut prévoir une cinquième station dans laquelle l'ensemble coupelle/valve est extrait du plateau rotatif. Sinon, l'extraction peut être réalisée dans la première station avant l'introduction d'une nouvelle coupelle nue.

Quelle que soit la méthode employée, il est possible de prévoir à la fin du montage un sertissage supplémentaire au niveau des griffes (407).

Bien que le moulage des joints soit une étape importante du procédé, il est également possible à la place de ce moulage de placer l'unité de joints (300) préfabriquée dans la coupelle.

L'avantage de l'invention réside d'une part dans la simplification de l'assemblage de l'ensemble valve/coupelle. En moulant les deux joints sous la forme d'une unité de joints on évite deux étapes d'assemblage. On passe donc d'un ensemble constitué de six pièces distinctes à stocker avant assemblage à un ensemble de quatre pièces dont certaines peuvent être fabriquées simultanément au moment de l'assemblage.

### Liste des références :

- 1: Ensemble valve/coupelle
- 100: Corps de valve
110 Partie supérieure
111 Sommet / Bord en saillie
120 Tubulure inférieure
121 Moyens de retenue
130 Couronne
131 Première section
132 Deuxième section
133 Troisième section
134 Épaulement
135 Créneaux
- 200: Tige
201 Première section
202 Deuxième section
205 Premier épaulement
206 Saillie annulaire
207 Paroi de séparation
208 Tenon de guidage pour le ressort
210 Canal supérieur
212 Orifice de passage
220 Canal inférieur
- 300: Unité de joints
310 Premier élément annulaire / Joint extérieur
311 Bord annulaire
312 Cylindre
313 Élément annulaire
320 Deuxième élément annulaire / Joint intérieur
321 Ouverture centrale
322 Gorge annulaire
323 Bourrelet
330 Bandes
- 400: Coupelle
401 Disque radial
402 Ouverture centrale
403 Premier cylindre
404 Élément annulaire radial
405 Deuxième cylindre
406 Bord de sertissage
407 Enfoncement
408 Bord roulé en forme de canal autour de l'ouverture centrale
- 500: Ressort

## Revendications

1. Procédé pour fabriquer un ensemble coupelle/valve (1) comprenant une coupelle (400) munie d'un dôme (401) et d'un bord de sertissage (406), une unité de valve comprenant un corps de valve (100), une tige (200) et un élément ressort (500) pour maintenir la tige en position fermée en l'absence de contrainte externe, ainsi qu'un joint intérieur (320) à placer dans le dôme (401) de la coupelle et un joint extérieur (311) à placer dans le bord de sertissage (406) de la coupelle, **caractérisé en ce que** le joint intérieur (320) et le joint extérieur (311) sont moulés simultanément sur une même face de la coupelle (400) dans une presse à l'aide d'une même buse d'injection, des passages étant prévus dans le moule et/ou la coupelle pour permettre au matériau en fusion d'atteindre l'emplacement des deux joints (311, 320) en formant des éléments de liaison reliant ensemble les deux joints, ces éléments de liaison étant constitués de préférence par une ou plusieurs bandes (330) ou par une paroi continue.

2. Procédé selon la revendication précédente, **caractérisé en ce que** le moulage du joint extérieur (311) s'étend (312, 313) sur une partie (404, 405) de la coupelle en direction du dôme et/ou le joint intérieur (320) est moulé sur le disque radial (401) formant le fond du dôme de la coupelle.

3. Procédé selon l'une des revendications précédentes, **caractérisé en ce que** le moulage des joints (311, 320) est réalisé dans une presse de moulage munie d'un plateau rotatif ayant au moins deux positions de travail.

4. Procédé selon la revendication précédente, **caractérisé en ce que** le plateau rotatif de la presse de moulage a au moins trois positions de travail appelées stations, les étapes successives suivantes étant prévues dans le procédé :
a) la coupelle (400) est placée sur le plateau rotatif dans la première station, puis le plateau est pivoté jusqu'à la station suivante de sorte que la coupelle se trouve dans la deuxième station ;
b) le premier et le deuxième joint (311, 320) sont moulés dans la coupelle, puis le plateau est pivoté jusqu'à la station suivante de sorte que la coupelle munie des joints se trouve dans la troisième station ;
c) le corps de valve (100), la tige (200) et l'élément ressort (500) sont insérés dans la coupelle en formant l'ensemble coupelle/valve (1).

5. Procédé selon la revendication 3, **caractérisé en ce que** le plateau rotatif de la presse de moulage a au moins quatre positions de travail, appelées stations, les étapes successives suivantes étant prévues dans le procédé :
a. la coupelle (400) est placée sur le plateau rotatif dans la première station, puis le plateau est pivoté jusqu'à la station suivante de sorte que la coupelle se trouve dans la deuxième station ;
b. le premier et le deuxième joint (311, 320) sont moulés dans la coupelle, puis le plateau est pivoté jusqu'à la position suivante de sorte que la coupelle munie des joints se trouve dans la troisième station ;
c. le corps de valve (100) et/ou la tige (200) sont moulés sur le plateau rotatif, puis le plateau est pivoté jusqu'à la station suivante de sorte que la coupelle munie des joints, et le corps de valve et/ou la tige se trouvent dans la quatrième station ;
d. le corps de valve (100), la tige (200) et l'élément ressort (500) sont insérés dans la coupelle en formant l'ensemble coupelle/valve (1).

6. Procédé selon la revendication 3, **caractérisé en ce que** le plateau rotatif de la presse de moulage a au moins quatre positions de travail, appelées station, les étapes successives suivantes étant prévues dans le procédé :
a. la coupelle (400) est placée sur le plateau rotatif dans la première station, puis le plateau est pivoté jusqu'à la station suivante de sorte que la coupelle se trouve dans la deuxième station ;
b. le premier et le deuxième joints (311, 320) sont moulés dans la coupelle, puis le plateau est pivoté jusqu'à la station suivante de sorte que la coupelle munie des joints se trouve dans la troisième station ;
c. la tige (200) préfabriquée est insérée dans la coupelle munie des joints, puis le plateau est pivoté jusqu'à la station suivante de sorte que la coupelle munie des joints et de la tige se trouve dans la quatrième station ;
d. le corps de valve (100) préfabriqué est inséré dans la coupelle munie des joints, de la tige (200) et de l'élément ressort (500) en formant l'ensemble coupelle/valve (1) l'élément ressort pouvant être introduit soit à l'étape c), soit à l'étape d).

7. Procédé selon l'une des revendications 4, 5 ou 6, **caractérisé en ce que** la coupelle (400) est introduite dans le plateau tournant à l'étape a) par moulage dans la première station.

8. Procédé selon l'une des revendications 4, 5 ou 6, **caractérisé en ce que la** coupelle (400) est moulée dans une presse secondaire associée à la presse principale, dite presse de coupelle, et qu'elle est placée sur le plateau rotatif de la presse principale par une partie de la presse de coupelle.

9. Procédé selon l'une des revendications 5 à 8, **caractérisé en ce que** la tige (200) et/ou le corps de valve (100) sont moulés dans des presses secondaires associées à la presse de moulage principale, dites presse de tige ou presse de corps de valve, et **en ce qu'**ils sont insérés dans la coupelle par une partie de la presse secondaire correspondante.

10. Ensemble coupelle/valve (1) comprenant une coupelle (400) munie d'un dôme (401) et d'un bord de sertissage (406), un corps de valve (100), une tige (200), un élément ressort (500) pour maintenir la tige en position fermée en l'absence de contrainte externe, un joint intérieur (320) à placer dans le fond du dôme (401) de la coupelle et un joint extérieur (311) à placer dans le bord de sertissage (406) de la coupelle, le joint intérieur et le joint extérieur étant placés sur la même face de la coupelle, **caractérisé en ce que** le joint intérieur (320) et le joint extérieur (311) sont moulés dans la coupelle, **en ce que** le joint intérieur (320) et le joint extérieur (311) sont reliés ensemble par des éléments de liaison, ces éléments de liaison étant constitués de préférence par une ou plusieurs bandes (330) ou par une paroi continue.

11. Ensemble coupelle/valve selon la revendication 10, **caractérisé en ce que** le joint extérieur (311) se prolonge par un élément (312, 313) moulé sur la partie de la coupelle prolongeant le bord de sertissage (406) en direction du dôme (401).

12. Ensemble coupelle/valve selon la revendication 10 ou 11, **caractérisé en ce que** la coupelle est munie d'une ou plusieurs gorges réalisées dans sa face inférieure qui relient entre eux le joint intérieur (320) et le joint extérieur (311) ou l'élément moulé (312, 313) dans le prolongement du joint extérieur quand il y a un tel élément moulé.

13. Ensemble coupelle/valve selon l'une des revendications 10 à 12, **caractérisé en ce que** la coupelle (400) présente l'une au moins des caractéristiques suivantes :
• elle est munie de moyens de retenue mécanique (408) pour maintenir le joint moulé à sa place ;
• elle est réalisée dans une matière plastique, de préférence par moulage ;
• elle est munie d'enfoncements radiaux (407) pour l'encliquetage du corps de valve dans le dôme (401, 403) de la coupelle.

14. Presse de moulage pour la mise en oeuvre du procédé selon l'une des revendications 1 à 9, **caractérisée en ce qu'**ell**e** est munie d'une buse d'injection pour mouler simultanément le joint extérieur (311) et le joint intérieur (320) sur la même face de la coupelle, et **en ce que** des passages sont prévus dans le moule pour mouler les joints et/ou dans la coupelle pour permettre au matériau en fusion d'atteindre l'emplacement des deux joints (311, 320) en formant des éléments de liaison reliant ensemble les deux joints, ces éléments de liaison étant constitués de préférence par une ou plusieurs bandes (330) ou par une paroi continue.

15. Presse de moulage selon la revendication précédente, **caractérisée en ce qu**'elle est munie d'un plateau rotatif pouvant pivoter entre au moins deux positions.

16. Presse de moulage selon l'une des revendications 14 ou 15, **caractérisée en ce qu**'elle est munie de moyens pour insérer dans la coupelle (400) la tige (200), l'élément ressort (500) et le corps de valve (100).

17. Presse de moulage selon la revendication 16 ou la combinaison des revendications 15 et 16, **caractérisée en ce qu**'elle est munie d'une presse secondaire pour mouler la coupelle (400) et/ou d'une presse secondaire pour mouler la tige (200) et/ou d'une presse secondaire pour mouler le corps de valve (100), lesdites presses secondaires étant constituées chacune d'un plateau fixe parallèle au plateau rotatif de la presse principale et d'un plateau rotatif pouvant tourner entre au moins deux positions, la première dans laquelle il est en face du plateau fixe de la presse secondaire et la deuxième dans laquelle il est en face du plateau rotatif de la presse principale en regard de la station correspondante, une première partie du moule de l'élément à mouler (100, 200, 400) étant placée sur le plateau fixe de la presse secondaire et l'autre partie du moule étant placée sur le plateau rotatif de la presse secondaire.

## Patentansprüche

1. Verfahren zur Herstellung eine Ventilteller/Ventil-Baugruppe (1), umfassend einen mit einer Kuppel (401) und einem Bördelrand (406) versehenen Ventilteller (400), eine Ventileinheit mit einem Ventilkörper (100), einem Stem (200) und einem Federelement (500), um den Stem bei Abwesenheit von äußerer Belastung in der geschlossenen Position zu halten, sowie einer inneren Dichtung (320), die in die Kuppel (401) des Ventiltellers einsetzbar ist, und einer äußeren Dichtung (311), die in den Bördelrand (406) des Ventiltellers einsetzbar ist, **dadurch gekennzeichnet, dass** die innere Dichtung (320) und die äußere Dichtung (311) gleichzeitig auf ein und derselben Seite des Ventiltellers (400) in einer Presse mithilfe ein und derselben Spritzdüse ausgeformt werden, wobei Durchlässe in der Form und/oder dem Ventilteller vorgesehen sind, damit das Schmelzgut die Stelle der zwei Dichtungen (311, 320) erreichen kann, indem es Verbindungselemente ausformt, die die zwei Dichtungen miteinander verbinden, wobei diese Verbindungselemente vorzugsweise durch ein oder mehrere Bänder (330) oder durch eine durchgehende Wand gebildet sind.

2. Verfahren nach dem vorangehenden Patentanspruch, **dadurch gekennzeichnet, dass** das Ausformen der äußeren Dichtung (311) sich auf einen Teil (404, 405) des Ventiltellers in Richtung der Kuppel fortsetzt (312, 313) und/oder dass die innere Dichtung (320) auf der radialen Scheibe (401), die den tiefsten Teil der Kuppel bildet, ausgeformt ist.

3. Verfahren nach einem der vorangehenden Patentansprüche, **dadurch gekennzeichnet, dass** das Ausformen der Dichtungen (311, 320) in einer Formpresse erfolgt, die mit einem Drehtisch versehen ist, der mindestens zwei Arbeitspositionen aufweist.

4. Verfahren nach dem vorangehenden Patentanspruch, **dadurch gekennzeichnet, dass** der Drehtisch der Formpresse mindestens drei Arbeitspositionen, die Stationen genannt werden, aufweist, wobei die folgenden aufeinanderfolgenden Verfahrensschritte vorgesehen sind:
a) der Ventilteller (400) wird auf dem Drehtisch in der ersten Station platziert, dann wird der Tisch bis zur folgenden Station so gedreht, dass sich der Ventilteller in der zweiten Station befindet;
b) die erste und die zweite Dichtung (311, 320) werden im Ventilteller ausgeformt, dann wird der Tisch bis zur folgenden Station so gedreht, dass sich der mit den Dichtungen versehene Ventilteller in der dritten Station befindet;
c) der Ventilkörper (100), der Stem (200) und das Federelement (500) werden in den Ventilteller eingesetzt, wodurch die Ventilteller/Ventil-Baugruppe (1) gebildet wird.

5. Verfahren nach dem Patentanspruch 3, **dadurch gekennzeichnet, dass** der Drehtisch der Formpresse mindestens vier Arbeitspositionen, die Stationen genannt werden, aufweist, wobei die folgenden aufeinanderfolgenden Verfahrensschritte vorgesehen sind:
a) der Ventilteller (400) wird auf dem Drehtisch in der ersten Station platziert, dann wird der Tisch bis zur folgenden Station so gedreht, dass sich der Ventilteller in der zweiten Station befindet;
b) die erste und die zweite Dichtung (311, 320) werden im Ventilteller ausgeformt, dann wird der Tisch bis zur folgenden Station so gedreht, dass sich der mit den Dichtungen versehene Ventilteller in der dritten Station befindet;
c) der Ventilkörper (100) und/oder der Stem (200) werden auf dem Drehtisch ausgeformt, dann wird der Tisch bis zur folgenden Station so gedreht, dass sich der mit den Dichtungen versehene Ventilteller und der Ventilkörper und/oder der Stem in der vierten Station befinden;
d) der Ventilkörper (100), der Stem (200) und das Federelement (500) werden in den Ventilteller eingesetzt, wodurch die Ventilteller/Ventil-Baugruppe (1) gebildet wird.

6. Verfahren nach dem Patentanspruch 3, **dadurch gekennzeichnet, dass** der Drehtisch der Formpresse mindestens vier Arbeitspositionen, die Stationen genannt werden, aufweist, wobei die folgenden aufeinanderfolgenden Verfahrensschritte vorgesehen sind:
a) der Ventilteller (400) wird auf dem Drehtisch in der ersten Station platziert, dann wird der Tisch bis zur folgenden Station so gedreht, dass sich der Ventilteller in der zweiten Station befindet;
b) die erste und die zweite Dichtung (311, 320) werden im Ventilteller ausgeformt, dann wird der Tisch bis zur folgenden Station so gedreht, dass sich der mit den Dichtungen versehene Ventilteller in der dritten Station befindet;
c) der vorgefertigte Stem (200) wird in den mit den Dichtungen versehenen Ventilteller eingesetzt, dann wird der Tisch bis zur folgenden Station so gedreht, dass sich der mit den Dichtungen und dem Stem versehene Ventilteller in der vierten Station befindet;
d) der vorgefertigte Ventilkörper (100) wird in dem mit den Dichtungen, dem Stem (200) und dem Federelement (500) versehenen Ventilteller eingesetzt, wodurch die Ventilteller/Ventil-Baugruppe (1) gebildet wird,
wobei das Federelement (500) entweder im Schritt c) oder im Schritt d) eingesetzt werden kann.

7. Verfahren nach einem der Patentansprüche 4, 5 oder 6, **dadurch gekennzeichnet, dass** der Ventilteller (400) im Schritt a) auf dem Drehtisch durch Ausformen in der ersten Station eingesetzt wird.

8. Verfahren nach einem der Patentansprüche 4, 5 oder 6, **dadurch gekennzeichnet, dass** der Ventilteller (400) in einer der Hauptpresse zugeordneten Nebenpresse, die Tellerpresse genannt wird, ausgeformt wird und dass er auf dem Drehtisch der Hauptpresse durch einen Teil der Tellerpresse platziert wird.

9. Verfahren nach einem der Patentansprüche 5 bis 8, **dadurch gekennzeichnet, dass** der Stem (200) und/oder der Ventilkörper (100) in der Hauptformpresse zugeordneten Nebenpressen, die Stempresse bzw. Ventilkörperpresse genannt werden, ausgeformt werden und dass sie durch einen Teil der entsprechenden Nebenpresse in den Ventilteller eingesetzt werden.

10. Ventilteller/Ventil-Baugruppe (1) umfassend einen mit einer Kuppel (401) und einem Bördelrand (406) versehenen Ventilteller (400), einen Ventilkörper (100), einen Stem (200), einen Federelement (500), um den Stem bei Abwesenheit von äußerer Belastung in der geschlossenen Position zu halten, eine innere Dichtung (320), die im Boden der Kuppel (401) des Ventiltellers einsetzbar ist, und eine äußere Dichtung (311), die im Bördelrand (406) des Ventiltellers einsetzbar ist, wobei die innere Dichtung und die äußere Dichtung auf der gleichen Seite des Ventiltellers angeordnet sind, **dadurch gekennzeichnet, dass** die innere Dichtung (320) und die äußere Dichtung (311) in dem Ventilteller ausgeformt sind, dass die innere Dichtung (320) und die äußere Dichtung (311) über Verbindungselemente miteinander verbunden sind, wobei diese Verbindungselemente vorzugsweise durch ein oder mehrere Bänder (330) oder durch eine durchgehende Wand gebildet sind.

11. Ventiteller/Ventil-Baugruppe gemäß Patentanspruch 10, **dadurch gekennzeichnet, dass** die äußere Dichtung (311) sich durch ein auf dem Teil des Ventiltellers ausgeformtes Element (312, 313) fortsetzt, das den Bördelrand (406) in Richtung der Kuppel (401) verlängert.

12. Ventilteller/Ventil-Baugruppe gemäß Patentanspruch 10 oder 11, **dadurch gekennzeichnet, dass** der Ventilteller mit einer oder mehreren Einkerbungen auf seiner Unterseite versehen ist, wobei die Einkerbungen die innere Dichtung (320) und die äußere Dichtung (311) oder das in der Fortsetzung der äußeren Dichtung ausgeformte Element (312, 313) untereinander verbinden, falls ein solches ausgeformtes Element vorliegt.

13. Ventilteller/Ventil-Baugruppe gemäß einem der Patentansprüche 10 bis 12, **dadurch gekennzeichnet, dass** der Ventilteller (400) mindestens eines der folgenden Merkmale aufweist:
- er ist mit mechanischen Haltemitteln (408) versehen, um die ausgeformte Dichtung in ihren Sitz zu halten;
- er ist aus einem Kunststoff, vorzugsweise durch Ausformen, hergestellt;
- er ist mit radialen Eindrückungen (407) für das Einrasten des Ventilkörpers in die Kuppel (401, 403) des Ventiltellers versehen.

14. Formpresse für die Durchführung des Verfahrens gemäß einem der Patentansprüche 1 bis 9, **dadurch gekennzeichnet, dass** sie mit einer Spritzdüse versehen ist, um die äußere Dichtung (311) und die innere Dichtung (320) auf der gleichen Seite des Ventiltellers gleichzeitig auszuformen, wobei Durchlässe in der Form zum Formen der Dichtungen und/oder in dem Ventilteller vorgesehen sind, damit das Schmelzgut die Stelle der zwei Dichtungen (311, 320) unter Ausbildung von Verbindungselementen erreichen kann, die die zwei Dichtungen miteinander verbinden, wobei diese Verbindungselemente vorzugsweise durch ein oder mehrere Bänder (330) oder durch eine durchgehende Wand gebildet werden.

15. Formpresse gemäß dem vorhergehenden Patentanspruch, **dadurch gekennzeichnet, dass** sie mit einem Drehtisch versehen ist, der zwischen mindestens zwei Positionen drehbar ist.

16. Formpresse gemäß einem der Patentansprüche 14 oder 15, **dadurch gekennzeichnet, dass** sie mit Mitteln zum Einsetzen des Stems (200), des Ferderelements (500) und des Ventilkörpers (100) in den Ventilteller versehen ist.

17. Formpresse gemäß dem Patentanspruch 16 oder der Kombination aus den Patentansprüchen 15 und 16, **dadurch gekennzeichnet, dass** sie mit einer Nebenpresse zum ausformen des Ventiltellers (400) und/oder mit einer Nebenpresse zum Formen des Stems (200) und/oder mit einer Nebenpresse zum Formen des Ventilkörpers (100) versehen ist, wobei jede Nebenpresse aus einem festen Tisch, der parallel zum Drehtisch der Hauptpresse angeordnet ist, und einem Drehtisch, der sich zwischen mindestens zwei Positionen drehen kann, besteht, in deren ersten er dem festen Tisch der Nebenpresse gegenüber steht und in deren zweiten er dem Drehtisch der Hauptpresse gegenüber steht, und zwar gegenüber der entsprechenden Station, wobei ein erster Teil der Form des auszuformenden Elementes (100, 200, 400) auf dem festen Tisch der Nebenpresse angeordnet ist und der andere Teil der Form auf dem Drehtisch der Nebenpresse angeordnet ist.

## Claims

1. Method for manufacturing a mounting cup/valve assembly (1) comprising a mounting cup (400) provided with a dome (401) and a crimping edge (406), a valve unit comprising a valve body (100), a stem (200) and a spring element (500) for holding the stem in the closed position in the absence of any external force, as well as an internal seal (320) to be placed in the dome (401) of the mounting cup and an external seal (311) to be placed in the crimping edge (406) of the mounting cup, **characterised in that** the internal seal (320) and the external seal (311) are moulded simultaneously on the same face of the mounting cup (400) in a press by means of the same injection nozzle, passages being provided in the mould and/or the mounting cup to enable the molten material to reach the location of the two seals (311, 320) while forming connection elements connecting together the two seals, these connection elements preferably consisting of one or more bands (330) or a continuous wall.

2. Method according to the preceding claim, **characterised in that** the moulding of the external seal (311) extends (312, 313) over a part (404, 405) of the mounting cup in the direction of the dome and/or the internal seal (320) is moulded on the radial disc (401) forming the bottom of the dome of the mounting cup.

3. Method according to one the preceding claims, **characterised in that** the moulding of the seals (311, 320) is carried out in a moulding press provided with a rotary plate having at least two working positions.

4. Method according to the preceding claim, **characterised in that** the rotary plate of the moulding press has at least three working positions, referred to as stations, the following successive steps being provided in the method:
a) the mounting cup (400) is placed on the rotary plate in the first station, and then the plate is pivoted as far as the following station so that the mounting cup is situated in the second station;
b) the first and second seals (311, 320) are moulded in the mounting cup, and then the plate is pivoted as far as the following station so that the mounting cup provided with the seals is situated in the third station;
c) the valve body (100), the stem (200) and the spring element (500) are inserted in the mounting cup, forming the mounting cup/valve assembly (1).

5. Method according to claim 3, **characterised in that** the rotary plate of the moulding press has at least four working positions, referred to as stations, the following successive steps being provided in the method:
a. the mounting cup (400) is placed on the rotary plate in the first station, and then the plate is pivoted as far as the following station so that the mounting cup is situated in the second station;
b. the first and second seals (311, 320) are moulded in the mounting cup, and then the plate is pivoted as far as the following station so that the mounting cup provided with the seals is situated in the third station;
c. the valve body (100) and/or the stem (200) are moulded on the rotary plate, and then the plate is pivoted as far as the following station so that the mounting cup provided with the seals and the valve body and/or the stem are situated in the fourth station;
d. the valve body (100), the stem (200) and the spring element (500) are inserted in the mounting cup, forming the mounting cup/valve assembly (1).

6. Method according to claim 3, **characterised in that** the rotary plate of the moulding press has at least four working positions, referred to as stations, the following successive steps being provided in the method:
a. the mounting cup (400) is placed on the rotary plate in the first station, and then the plate is pivoted as far as the following station so that the mounting cup is situated in the second station;
b. the first and second seals (311, 320) are moulded in the mounting cup, and then the plate is pivoted as far as the following station so that the mounting cup provided with the seals is situated in the third station;
c. the prefabricated stem (200) is inserted in the mounting cup provided with the seals and then the plate is pivoted as far as the following station so that the mounting cup provided with the seals and the stem is situated in the fourth station;
d. the prefabricated valve body (100) is inserted in the mounting cup provided with the seals (311, 320), the stem (200) and the spring element (500), forming the mounting cup/valve assembly (1),
wherein the spring element (500) can be introduced either at step c) or at step d).

7. Method according to one of claims 4, 5 or 6, **characterised in that** the mounting cup (400) is introduced into the rotary plate at step a) by moulding in the first station.

8. Method according to one of claims 4, 5 or 6, **characterised in that** the mounting cup (400) is moulded in a secondary press associated with the main press, referred to as the mounting cup press, and is placed on the rotary plate of the main press by a part of the mounting cup press.

9. Method according to one of claims 5 to 8, **characterised in that** the stem (200) and/or the valve body (100) are moulded in secondary presses associated with the main moulding press, referred to as the stem press or valve body press, and **in that** they are inserted in the mounting cup by a part of the corresponding secondary press.

10. Mounting cup/valve assembly (1) comprising a mounting cup (400) provided with a dome (401) and a crimping edge (406), a valve body (100), a stem (200), a spring element (500) for holding the stem in the closed position in the absence of any external force, an internal seal (320) to be placed in the bottom of the dome (401) of the mounting cup and an external seal (311) to be placed in the crimping edge (406) of the mounting cup, the internal seal and the external seal being placed on the same face of the mounting cup, **characterised in that** the internal seal (320) and the external seal (311) are moulded in the mounting cup, **in that** the internal seal (320) and the external seal (311) are connected together by connecting elements, these connecting elements preferably consisting of one or more bands (330) or a continuous wall.

11. Mounting cup/valve assembly according to claim 10, **characterised in that** the external seal (311) is extended by an element (312, 313) moulded onto the part of the mounting cup extending the crimping edge (406) in the direction of the dome (401).

12. Mounting cup/valve assembly according to claim 10 or 11, **characterised in that** the mounting cup is provided with one or more grooves produced in its bottom face, which connect together the internal seal (320) and the external seal (311) or the moulded element (312, 313) in the extension of the external seal when there is such a moulded element.

13. Mounting cup/valve assembly according to one of claims 10 to 12, **characterised in that** the mounting cup (400) has at least one of the following features:
• it is provided with mechanical holding means (408) for holding the moulded seal in its place;
• it is produced from a plastics material, preferably by moulding;
• it is provided with radial indentations (407) for snapping the valve body in the dome (401, 403) of the mounting cup.

14. Moulding press for implementing the method according to one of claims 1 to 9, **characterised in that** it is provided with an injection nozzle for simultaneously moulding the external seal (311) and the internal seal (320) on the same face of the mounting cup, and **in that** passages are provided in the mould for moulding the seals and/or in the mounting cup to enable the molten material to reach the location of the two seals (311, 320), forming connection elements connecting together the two seals, these connecting elements preferably consisting of one or more bands (330) or a continuous wall.

15. Moulding press according to the preceding claim, **characterised in that** it is provided with a rotary plate that can pivot between at least two positions.

16. Moulding press according to one of claims 14 or 15, **characterised in that** it is provided with means for inserting the stem (200), the spring element (500) and the valve body (100) in the mounting cup (400).

17. Moulding press according to claim 16 or the combination of claims 15 and 16, **characterised in that** it is provided with a secondary press for moulding the mounting cup (400) and/or a secondary press for moulding the stem (200) and/or a secondary press for moulding the valve body (100), said secondary presses each consisting of a fixed plate parallel to the rotary plate of the main press and a rotary plate that can turn between at least two positions, the first in which it is facing the fixed plate of the secondary plate and the second in which it is facing the rotary plate of the main press in front of the corresponding station, a first part of the mould of the element to be moulded (100, 200, 400) being placed on the fixed plate of the secondary press and the other part of the mould being placed on the rotary plate of the secondary press.
